# EUROPÄISCHE PATENTANMELDUNG

(11) **EP 0 990 741 A2**
(43) Veröffentlichungstag der Anmeldung: **05.04.2000**
(21) Anmeldenummer: 99119667.6
(22) Anmeldetag: 04.10.1999
(51) Int. Cl.: E03C 1/304, F16L 15/00

(54) **Reinigungsvorrichtung für eine Rohrleitung, insbesondere Abwasserleitung**

(30) Priorität: 03.10.1998 DE 29817596 U
(71) Anmelder: Richter, Zdenek, 87719 Mindelheim (DE); Weichselbaumer, Peter Raum + Formgestaltung, 87719 Mindelheim (DE)
(72) Erfinder: Die Erfindernennung liegt noch nicht vor
(74) Vertreter: Fiener, Josef

(57) **Zusammenfassung**

Zur einfachen und platzsparenden Installation bei einer Reinigungsvorrichtung für eine Rohrleitung, insbesondere Abwasserleitung, mit einem Rohrabschnitt (1), in den von außen her ein Spülmedium einführbar ist, wird vorgeschlagen, daß der Rohrabschnitt (1) einen zumindest teilweise umlaufenden Kanal (12) aufweist, über den das Spülmedium in das Rohrinnere (11) geleitet wird.

## Beschreibung

Die Erfindung bezieht sich auf eine Reinigungsvorrichtung für eine Rohrleitung, insbesondere eine Abwasserleitung gemäß dem Oberbegriff des Anspruchs 1.

Allgemein besteht das Problem, daß sich insbesondere Abwasserleitungen in Haushalten oder Gewerbebetrieben im Laufe der Zeit zusetzen und dann aufwendig zu reinigen sind. Zur Reinigung werden chemische Mittel eingespült, die die Umwelt in hohem Maße belasten und teils auch die Abwasserleitungen von innen her angreifen, oder verstopfte Abwasserleitungen werden mit Spiralen freigebohrt, was ebenfalls zu deren Schädigung führen kann.

Zum Beseitigen bestehender Verstopfungen wird in der DE 35 35 718 A1 ein Verbindungsflansch vorgeschlagen, der von außen her über eine Abflußeinlauföffnung gesetzt und in dieser verriegelt wird, um Luft oder Wasser in den Abfluß einpressen zu können. Nachteilhaft ist dabei insbesondere, daß der Verbindungsflansch getrennt aufzubewahren ist. Zudem müssen die Abflußeinlauföffnungen besonders ausgebildet sein, um das Verriegeln zu ermöglichen.

Die DE 37 31 441 A1, EP 0 027 980 A1 und DE 196 20 783 A1 zeigen Systeme, bei denen ein Leitungssystem dadurch gereinigt wird, daß Luft und/oder Spülflüssigkeit in das Leitungssystem eingebracht wird. Dabei erfolgt das Einbringen unter Einsatz von Einrichtungen, die pulsartige Druckerhöhungen und/oder Rückbewegungen ermöglichen. Beispielsweise werden Unterdruck-Entspannungsventile oder Rückstoßdüsen eingesetzt. Durch solche Mittel wird ein besseres Lösen von festsitzenden Verschmutzungen erzielt. Diese Systeme sind dabei von Aufbau und Betrieb her aufwendig gestaltet.

Aus dem Gebrauchsmuster DE 297 05 016 U1 ist eine Anordnung bekannt, bei der wahlweise entweder eine Reinigungsdüse oder eine Blindvorrichtung an einem ringförmigen Kragen einer Rohrwandung angebracht werden können. Bei angesetzter Reinigungsdüse ragt diese jedoch in das zu reinigende Rohr hinein, so daß sie für einen Einsatz in Abwasserrohren nicht einsetzbar ist, da sich Schmutz an der Seite anlagern würde, die der Spülöffnung gegenüberliegt.

In der DE 39 08 143 A1 wird vorgeschlagen, in einen Rohrstrang einer installierten Frischwasserleitung ein T-Rohrstück einzusetzen, über dessen seitlichen Anschluß eine Spülflüssigkeit eingepumpt werden kann. Die Verwendung von Rückschlagventilen wird als Maßnahme beschrieben, die ein Abdrücken der Leitung nach der Installation ermöglicht, so daß deren Dichtigkeit überprüft werden kann. Eine sinnvolle Einsatzmöglichkeit im Zusammenhang mit Abwasserleitungen wird hier jedoch nicht aufgeführt. Außerdem fehlt eine gezielte Reinigungseinwirkung.

In der DE 43 42 612 A1 ist eine Spülvorrichtung beschrieben, bei der ein gekrümmtes Rohr von der Seite her in ein zu spülendes Rohr hineingeführt ist, wobei die Spülflüssigkeit in Ablaufrichtung eingespritzt wird. Auch hier zeigt sich der Nachteil, daß grobe oder dickflüssige Partikel, beispielsweise Essensreste aus gespülten Töpfen, an der Seite des Spülrohrs hängen bleiben, die der Abwasserströmung zugewandt ist.

Aus der DE 37 43 703 C2, DE 37 16 204 C2 und DE 87 06 967 U1 sind Einrichtungen zur Verbesserung des Durchflusses eines Abflußrohres bekannt. Dabei ist eine Düker-Anordnung, d. h. hier ein tiefliegender Rohrabschnitt, in dem stets Wasser steht, mit einer Strahlreinigungsvorrichtung ausgestattet. Diese besteht im wesentlichen aus einer Vielzahl einzelner Röhrchen, die in dem Abwasserrohr über dessen Umfang zueinander winkelversetzt angeordnet sind. Dadurch und durch eine schräg in das Abwasserrohr gerichtete Strahlrichtung wird im Abwasser eine Drallströmung erzeugt, die durch ein impulsartiges Einpressen von Spülwasserstrahlen unterstützbar ist. Baulich ist eine solche Anordnung jedoch aufwendig gestaltet, da mehrere Spülröhrchen an einem Abwasserrohr angebracht sind. Auch ist eine solche Anordnung in der Regel zu groß, um sie beispielsweise unter dem Abfluß eines Haushaltsspülbeckens anzubringen.

Aus der DT 21 50 711 B2 ist eine Wasserstrahlpumpe bekannt, die als ein Tiefsauger einsetzbar ist. Die Pumpe besteht dabei im wesentlichen aus einem oberen zylindrischen Abschnitt, durch dessen zentrales Rohr eine Flüssigkeit einsaugbar ist, und einem sich nach unten hin verjüngenden Auslaßrohr. In den oberen Abschnitt führt seitlich ein Eintrittsstutzen hinein, durch den Hochdruckwasser in einen ringförmigen Kanal gepreßt wird. Der ringförmige Kanal führt dabei um das zentrale Rohr herum. Vom Ringkanal aus führen Austrittskanäle schräg nach unten hin in das Auslaßrohr hinein. Unter hohem Druck aus diesen Austrittskanälen spritzendes Wasser reißt Wasser aus dem zentralen Rohr mit.

Die Aufgabe der Erfindung besteht darin, eine Reinigungsvorrichtung für eine Rohrleitung, insbesondere Abwasserleitung, mit einem einfachen Aufbau bereitzustellen, die einfach und platzsparend installierbar ist.

Diese Aufgabe wird durch eine Reinigungsvorrichtung für eine Rohrleitung, insbesondere Abwasserleitung, mit den Merkmalen des Anspruchs 1 gelöst.

Eine solche Reinigungsvorrichtung ist baulich kompakt, einfach installierbar und auch nachrüstbar. Durch den umlaufenden Kanal erfolgt eine gleichmäßige Verteilung des Spülmediums in das Rohrinnere.

Vorteilhafte Ausgestaltungen sind Gegenstand von Unteransprüchen.

Ein vollständig umlaufender Kanal ist einfach zu fertigen, ermöglicht eine gleichmäßige Zuführung des Spülmediums in das Rohrinnere und ermöglicht auch im Falle des Verstopfens durch einen größeren Partikel eine Versorgung nahezu aller Spülkanäle.

Je mehr Spülkanäle in das Rohrinnere führen, desto gleichmäßiger ist die Spülwirkung. Die Ausgestaltung der Spülkanäle ermöglicht dabei eine gezielte Beeinflussung der Strömung und der Reinigungswirkung.

Ein mehrteiliges Reinigungsrohr ist besonders einfach herzustellen.

Der Einbau zumindest eines Rückschlagventils dient zur Absicherung der Zuflußleitung für das Spülmedium, kann aber auch zur gezielten Beeinflussung der Strömung in dem zentralen Rohr genutzt werden. So können pulsierende Stöße erzeugt werden. Der Einsatz von Rückschlagventilen mit verschiedenen Kennwerten in verschiedenen Spülkanälen ermöglicht auch ein verschiedenes bzw. abwechselndes Öffnen und Schließen der einzelnen Spülkanäle, was die Reinigungswirkung ebenfalls positiv beeinflußt.

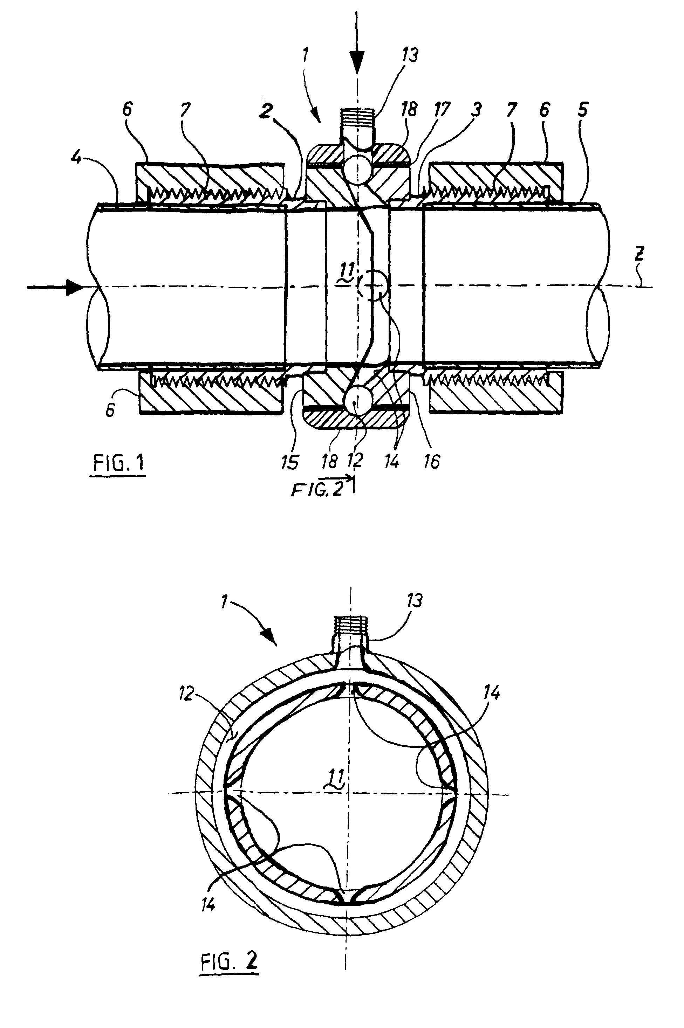

Ein Ausführungsbeispiel wird nachstehend anhand der Zeichnung näher beschrieben, bei der
- Fig. 1: einen Längsteilschnitt und
- Fig. 2: einen Querschnitt durch eine Rohrreinigungsvorrichtung darstellen.

Wie aus den Figuren ersichtlich, besteht die Rohrreinigungsvorrichtung vom Grundaufbau her aus einem zentralen ringförmigen Abschnitt 1 und an jeder von dessen beiden Seiten einem Rohransatzstück 2 bzw. 3 mit einer gemeinsamen zentralen Zylinder- bzw. Strömungsachse Z, so daß eine Flüssigkeit vorzugsweise ungestört geradlinig hindurchgeleitet werden kann. Natürlich ist auch ein Einsatz bei Rohren zum Transport anderer Medien, z. B. pulverförmiger Lebensmittel möglich.

Die beiden Rohransatzstücke 2 bzw. 3 dienen zum Anschließen eines herkömmlichen Rohres, wobei das Rohransatzstück 2 z. B. direkt mit einem Auslaßstutzen 4 eines Waschbeckens und das andere Rohransatzstück 3 z. B. mit einem Siphon 5 verbindbar ist. Zum Anschließen können übliche Kopplungselemente vorgesehen sein, wie beispielsweise die dargestellten Klemmuffen 6, die auf entsprechende Außengewinde 7 der Rohransatzstücke 2 bzw. 3 aufgeschraubt sind. Dadurch werden die Rohransatzstücke 2 bzw. 3 mit den eingeschobenen Rohren 4 bzw. 5 verklemmt.

Vorzugsweise nimmt der Innendurchmesser der Rohransatzstücke 2 bzw. 3 unweit des ringförmigen Abschnitts 1 abgestuft zu, wobei die Durchmesservergrößerung der Stärke der Wand des einzuschiebenden Rohres 4 bzw. 5 entspricht. Dadurch ist die Innenwandung zur Vermeidung von Ablagerungen im Übergangsbereich zwischen diesen durchgängig glatt.

Der ringförmige Abschnitt 1 hat eine Durchtrittsöffnung 11, deren Innendurchmesser vorzugsweise dem der Innendurchmesser der Rohransatzstücke 2 bzw. 3 angepaßt ist.

Durch die Wandung des ringförmigen Abschnitts 1 führt ein Kanal 12, der vorzugsweise aber nicht notwendig umlaufend ausgebildet ist.

Der Kanal 12 steht mit einem Spülanschlußstutzen 13 in Verbindung, der wiederum an eine Spülquelle anschließbar ist. Als Spülquelle kann im einfachsten Fall ein Wasseranschluß gewählt werden, jedoch sind beispielsweise auch Verbindungen zu speziellen Pumpen möglich, durch die Wasser mit oder ohne Zusätzen, Luft oder sonstige geeignete Spülmedien unter Druck einpreßbar sind.

Vom Kanal 12 aus führen ein oder vorzugsweise mehrere Spülkanäle 14 zur Durchtrittsöffnung 11 des ringförmigen Abschnitts 1 bzw. dem Rohrinneren, so daß ein Spülmittel dort hinein geführt werden kann. Die Spülkanäle 14 sind vorzugsweise als Düsen ausgebildet. Insbesondere verlaufen sie vom Kanal 12 aus schräg in Durchflußrichtung der Durchtrittsöffnung 11 für das Schmutzwasser hin, um dessen Strömung zu unterstützen.

Je nach Anzahl und Einsatzbereich, z. B. bei Systemen, bei denen ein geräuscharmes Fließen gewünscht ist, können einzelne oder alle Spülkanäle 14 auch fächerförmig oder kegelförmig aufgeweitet geformt sein. Jedoch sind auch Spülkanäle 14 formbar, die dem Abwasser in der Durchtrittsöffnung 11 einen Drall geben. Dadurch wird die Reinigungswirkung erhöht, es entstehen aber auch Geräusche.

Die Innenwandung und der Durchmesser des Kanals 12 können über seine Länge auch so geformt sein, daß der Druck an allen Spülkanälen 14 gleich oder aber voreingestellt verschieden ist.

Die Rohransatzstücke 2 und 3 und der ringförmige Abschnitt 1 können beliebig aus einem einzigen, zwei oder mehr miteinander verbundenen Bauteilen gefertigt sein.

In der dargestellten Ausführungsform ist der ringförmige Abschnitt 1 aus zwei Seitenteilen 15 bzw. 16, einer Dichtung 17 und einem Spannring 18 zusammengesetzt, die als Spritzgußteile so geformt sind, daß sie besonders einfach fertigbar sind.

Dabei sind die beiden Seitenteile 15 bzw. 16 als im wesentlichen flache, ringförmige Scheiben ausgebildet, wobei das eine Seitenteil 15 zusammengesetzt vorzugsweise konisch in das andere Seitenteil 16 hineinragt. Dadurch können der ringförmige Kanal 12 und auch die Spülkanäle 14 direkt in den aneinander liegenden konischen Flächen eingeformt sein.

Die beiden zusammengesetzten Seitenteile 15 bzw. 16 werden von der Dichtung 17 umgeben und vom Spannring 18, der außenseitig auch den Spülanschluß trägt, miteinander verspannt. In die Innenseite des Spannrings 18 kann ein Teil des ringförmigen Kanals 12 eingeformt sein, wie dies dargestellt ist.

Die Reinigungsvorrichtung, insbesondere der zentrale Abschnitt 1, muß nicht notwendig ringförmig sein. Insbesondere bei nicht kreisrunden Kanälen, die zu spülen sind, bietet sich auch jede andere geeignete Bemaßung und Form an. Die Rohransatzstücke 2 bzw. 3 können z. B. auch bloß als Innengewinde im Rand der Durchtrittsöffnung 11 ausgebildet sein.

In besonders bevorzugter Ausführungsform sind im Bereich der Spülkanäle 14, des Kanals 12, des Spülanschlusses 13 und/oder der Zuleitung zu diesem hier nicht dargestellte Rückschlagventile eingesetzt. Diese sichern einerseits die Spülwasser zuführende Leitung vor dem Eindringen von Schmutzwasser oder Schmutz und andererseits bewirken sie bei entsprechender Dimensionierung von insbesondere deren Federelementen ein stoßartiges Einspritzen des Spülmittels, was zu einem kurzzeitigen Hin- und Herfließen des Abwassers führen kann.

## Patentansprüche

1. Reinigungsvorrichtung für eine Rohrleitung, insbesondere Abwasserleitung, mit einem Rohrabschnitt (1), in den von außen her ein Spülmedium einführbar ist,
dadurch gekennzeichnet, daß
der Rohrabschnitt (1) einen zumindest teilweise umlaufenden Kanal (12) aufweist, über den das Spülmedium in das Rohrinnere (11) geleitet wird.

2. Reinigungsvorrichtung nach Anspruch 1,
dadurch gekennzeichnet, daß
der Kanal (12) umlaufend ist.

3. Reinigungsvorrichtung nach Anspruch 1 oder 2,
dadurch gekennzeichnet, daß
vom Kanal (12) aus eine Vielzahl von Spülkanälen (14) in das Rohrinnere (11) führt.

4. Reinigungsvorrichtung nach einem der vorhergehenden Ansprüche,
dadurch gekennzeichnet, daß
Spülkanäle (14) vom Kanal (12) in das Rohrinnere (11) schräg in Durchflußrichtung gerichtet sind und/oder fächerförmig und/oder als Düsen ausgebildet sind.

5. Reinigungsvorrichtung nach einem der vorhergehenden Ansprüche, gekennzeichnet durch einen zentralen, insbesondere ringförmigen Rohrabschnitt (1) und ein Rohransatzstück (2 bzw. 3) an jeder von dessen beiden Seiten, wobei diese vorzugsweise eine gemeinsame Strömungsachse (Z) aufweisen.

6. Reinigungsvorrichtung nach Anspruch 5,
dadurch gekennzeichnet, daß
der Innendurchmesser der Rohransatzstücke (2 bzw. 3) unweit des zentralen Rohrabschnitts (1) abgestuft zunimmt.

7. Reinigungsvorrichtung nach einem der vorhergehenden Ansprüche,
dadurch gekennzeichnet, daß
der insbesondere ringförmige Rohrabschnitt (1) aus zumindest zwei Seitenteilen (15 bzw. 16) und einem Spannring (18) zusammengesetzt ist, die vorzugsweise Spritzgußteile sind.

8. Reinigungsvorrichtung nach Anspruch 7,
dadurch gekennzeichnet, daß
die beiden Seitenteile (15 bzw. 16) als im wesentlichen flache, ringförmige Scheiben ausgebildet sind, wobei das eine Seitenteil (15) zusammengesetzt vorzugsweise konisch in das andere Seitenteil (16) hineinragt.

9. Reinigungsvorrichtung nach Anspruch 7 oder 8,
dadurch gekennzeichnet, daß
der Kanal (12) und/oder die Spülkanäle (14) direkt in zumindest einer der aneinander liegenden Flächen der beiden Seitenteile (15 bzw. 16) eingeformt ist/sind.

10. Reinigungsvorrichtung nach einem der vorhergehenden Ansprüche,
dadurch gekennzeichnet, daß
im Bereich der Spülkanäle (14), des Kanals (12), des Spülanschlusses (13) und/oder der Zuleitung zu diesem zumindest ein Rückschlagventil eingesetzt ist.
